# EUROPEAN PATENT APPLICATION

(11) **EP 1 241 819 A2**
(43) Date of publication of application: **18.09.2002**
(21) Application number: 02251671.0
(22) Date of filing: 08.03.2002
(51) Int. Cl.: H04J 14/02, H04B 10/08, H04B 10/155

(54) **Optical communication monitor**

(30) Priority: 12.03.2001 JP 2001069339; 04.07.2001 JP 2001203899; 05.03.2002 JP 2002059361
(71) Applicant: Nippon Sheet Glass Co.,Ltd., Osaka-shi, Osaka 541-8559 (JP)
(72) Inventor: Sato, Yoshiro, Chuou-ku, Osaka-shi, Osaka 541-8559 (JP); Nagasaka, Shigeki, Chuou-ku, Osaka-shi, Osaka 541-8559 (JP); Nakama, Kenichi, Chuou-ku, Osaka-shi, Osaka 541-8559 (JP)
(74) Representative: Sherrard-Smith, Hugh

(57) **Abstract**

An optical communication monitor that easily and inexpensively enables the expansion of the number of channels and enables the intensity of channels of an optical signal to be easily recognized. The monitor includes an optical demultiplexer module (22) for dividing light, in which optical signals of multiple channels are multiplexed, in each channel to detect the optical signals and generate multiple detection signals. An electric circuit unit (23) is connected to the first demultiplexer module to process the detection signals and generate electric signals of the multiple channels. A board (21) on which the first electric circuit unit and the first optical demultiplexer module are located includes open area (24) for additionally mounting another optical demultiplexer module.

## Description

The present invention relates to an optical communication monitor, and more particularly, to an optical communication monitor used for wavelength division multiplexing (WDM) transmission.

In the WDM transmission technique, multiplexed optical signals having different wavelengths (i.e., optical signals of multiple channels) are transmitted through a single optical fiber. The optical transmission signal of each channel has a wavelength set in a 1550nm band. A predetermined interval (e.g., an interval of 0.4nm) is provided between the channels. In other words, n channels (ch) of optical transmission signals, which are multiplexed in a single optical fiber, have differing wavelengths λ1-λn.

A WDM system includes light sources for multiple channels, a multiplexer for combining optical signals of multiple channels in a single fiber, an optical fiber amplifier, and a demultiplexer for separating a multiplexed optical signal in each wavelength to generate optical signals of multiple channels. An optical communication monitor monitors the light intensity and light wavelength of each channel in a transmission path to guarantee the quality of the WDM system and stabilize the WDM system.

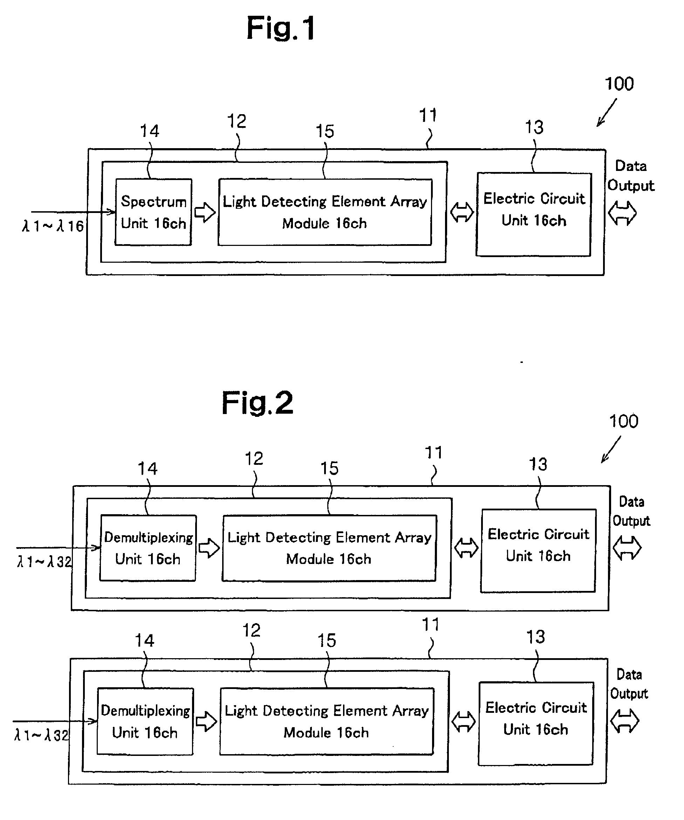

Referring to Fig. 1, a prior art optical communication monitor (optical communication monitor module) 100 includes a monitor-incorporated board 11, an optical demultiplexer module 12 mounted on the board 11, and an electric circuit unit 13.

The optical demultiplexer module 12 includes a spectrum unit 14 and a light receiving element array module 15. The spectrum unit 14 separates, for example, a received light, in which 16 channels of optical signals λ1-λ16 having different wavelengths are multiplexed, and generates optical signals of multiple channels, which are imaged by an optical detector of the light receiving element array module 15.
The light receiving element array module 15 detects the intensity of the optical signal of each channel wavelength and generates a detection signal. The electric circuit unit 13 processes the output signal (detection signal) of the optical demultiplexer module 12 and generates electric signals of 16 channels in accordance with the intensity of the optical signal in each channel wavelength.

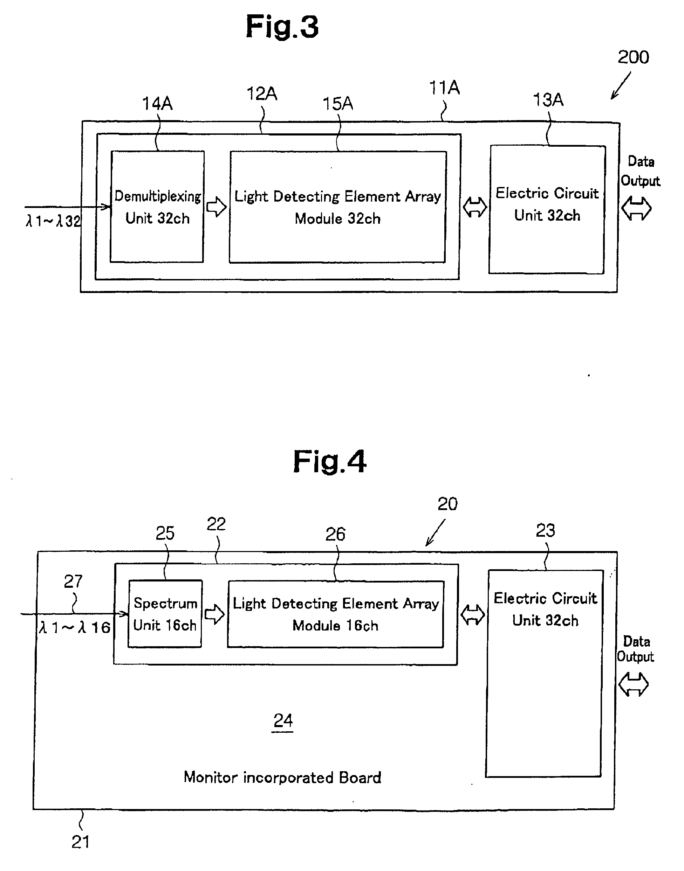

The number of optical signal channels may be expanded, for example, from 16 channels (ch) to 32ch by employing the optical communication monitor 100 as illustrated in Fig. 2 or Fig. 3. In Fig. 2, another 16ch optical communication monitor 100 is added so that the monitors 100 may be used as a set. In Fig. 3, a 32ch optical communication monitor 200 is used.

Conventional communication monitors are not originally intended to have expandable channels. Thus, when the number of optical signal channels is expanded from 16 to 32 as illustrated in Fig. 2, the 16ch optical communication monitor 100 must be newly added. In such a case, time and money would be necessary to manufacture the additional monitor.

Further, when the channels are expanded by employing the 32ch optical communication monitor 200 of Fig. 3, the monitor 200 must be manufactured. In such a case, since the 32ch optical demultiplexer module 12A is larger than the 16ch optical demultiplexer module 12, a board 11A that is larger than the board 11 of Fig. 1 becomes necessary. Further, the 32ch optical demultiplexer module 12A is more expensive than the 16ch optical demultiplexer module 12. A 32ch electric circuit unit 13A is also more expensive than the 16ch electric circuit unit 13. In addition, the optical communication monitor 100 used prior to the expansion of channels may no longer be used. This would be wasteful and result in increased costs.

A spectrum analyzer is widely used in the prior art as an optical communication monitor. The optical spectrum analyzer displays optical spectrums on a screen. Each optical spectrum indicates the measured intensity of the optical signal of an associated channel.

However, the optical spectrum analyzer can simultaneously display only some, for example, eight, of the measured channels on the screen. Thus, the operator must scroll the screen showing the optical spectrums to determine whether or not the light intensity of every channel or the light intensity of a certain channel is normal.
Accordingly, the operator cannot easily recognize the intensity of every channel or a certain channel. Further, the optical spectrum analyzer has many functions in addition to the function for measuring the light intensity of each channel. Thus, the optical spectrum analyzer is extremely expensive.

It is a first objective of the present invention to provide an optical communication monitor that easily and inexpensively enables the expansion of the number of channels.

It is a second objective of the present invention to provide an inexpensive optical communication monitor that enables the intensity of every channel or certain channel of an optical signal to be easily recognized.

To achieve the above objectives, the present invention provides an optical communication monitor including a first optical demultiplexer module for dividing light, in which optical signals of multiple channels are multiplexed, in each channel to detect the optical signals and generate multiple detection signals. A first electric circuit unit is connected to the first demultiplexer module to process the detection signals and generate electric signals of the multiple channels. A board on which at least the first optical demultiplexer module is located includes open area for additionally mounting at least one second optical demultiplexer module.

A further embodiment of the present invention is an optical communication monitor for dividing light, in which optical signals of multiple channels are multiplexed, in each channel to measure an optical power level of the optical signal of each channel. The monitor includes a body frame having an outer panel, and a display unit arranged on the outer panel. The display unit includes a plurality of illuminations for indicating the optical power levels of the optical signals of the multiple channels.

The invention, and preferred objects and advantages thereof, may best be understood by reference to the following description of the certain exemplifying embodiments together with the accompanying drawings in which:
Fig. 1 is a schematic block diagram showing a prior art optical communication monitor;
Fig. 2 is a schematic block diagram showing a first example of a prior art optical communication monitor for an expanded number of channels;
Fig. 3 is a schematic block diagram showing a second example of a prior art optical communication monitor for an expanded number of channels;
Fig. 4 is a schematic block diagram showing an optical communication monitor according to a first embodiment of the present invention;
Fig. 5 is a schematic block diagram showing the optical communication monitor of Fig. 4 corresponding to an expanded number of channels;
Fig. 6 is a schematic block diagram of an optical communication monitor according to a second embodiment of the present invention;
Fig. 7 is a schematic block diagram of an optical communication monitor according to a third embodiment of the present invention;
Fig. 8 is a schematic block diagram showing the optical communication monitor of Fig. 7 corresponding to an expanded number of channels;
Fig. 9 is a schematic block diagram of an optical communication monitor according to a fourth embodiment of the present invention;
Fig. 10 is a perspective view showing the monitor of Fig. 9;
Fig. 11 is a perspective view showing the monitor of Fig. 9 taken from a side opposite to the side of Fig. 10;
Fig. 12 is a schematic view showing a display unit of an optical communication monitor according to a fifth embodiment of the present invention;
Fig. 13 is a schematic view showing a display unit of an optical communication monitor according to a sixth embodiment of the present invention;
Fig. 14 is a schematic view showing a display unit of an optical communication monitor according to a seventh embodiment of the present invention;
Fig. 15 is a schematic view showing a display unit of an optical communication monitor according to an eighth embodiment of the present invention; and
Fig. 16 is a schematic block diagram of an optical communication monitor according to a ninth embodiment of the present invention.

In the drawings, like numerals are used for like elements throughout.

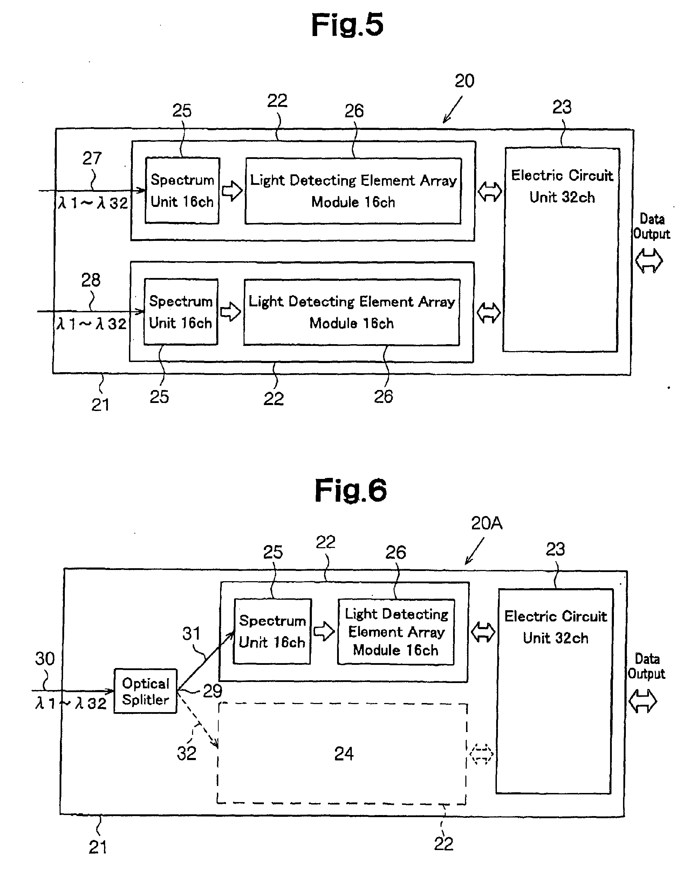

Referring to Figs. 4 and 5, an optical communication monitor 20 according to a first embodiment of the present invention detects optical signals of multiple channels having different wavelengths. For example, the optical communication monitor 20 detects the intensity of the optical signals. The optical communication monitor 20 includes a monitor-incorporated board 21, an optical demultiplexer module 22 mounted on the board 21, and an electric circuit unit 23.

Referring to Fig. 4, the optical demultiplexer module 22, which is mounted on the board 21, is used for 16 channels (16ch), which is the basic number of channels. That is, the optical demultiplexer module 22 is used for the minimum number of channels. An open area 24 is provided on the board 21. An additional optical demultiplexer module 22 is mounted in the open area 24 when the number of channels in an optical signal is expanded. In other words, the board 21 is provided with the open area 24 so that an additional optical demultiplexer module 22 may be mounted in the open area 24.

The board 21 also has a section in which an n number (in the first embodiment, two) of optical fibers 27, 28 are arranged. The optical fibers 27, 28 transmit light to an n number of optical demultiplexer modules 22 (in the first embodiment, two). In this embodiment, n represents the number of optical demultiplexer modules 22 that may ultimately be mounted on the board 21.

The demultiplexer module 22, the open area 24, and the electric circuit unit 23 are provided in a box, which is arranged on the board 21. In other words, an n number of the demultiplexer modules 22, which are ultimately mounted on the board 21, and the electric circuit unit 23 are provided in a box, which is arranged on the board 21. Alternatively, the n number of demultiplexer modules 22 and the open area 24 may each be provided in different boxes, which are arranged on the board 21.

The optical demultiplexer module 22 includes a spectrum unit 25 and a light receiving element array module 26. The spectrum unit 25 divides the received light, in which optical signals λ1-λ16 of multiple channels (in the first embodiment, 16) having different wavelengths are multiplexed, in each channel wavelength to generate optical signals of the 16 channels that are imaged by an optical detector of the light receiving element array module 26. The light receiving element array module 26 detects the intensity of the optical signal of each channel wavelength imaged by the optical detector to generate a detection signal.

The spectrum unit 25 receives light in which the 16 channels of the optical signals λ1-λ16 are multiplexed through the single optical fiber 27. In other words, the light, in which the 16 optical signals λ1-λ16 are multiplexed, enters the spectrum unit 25 through the single optical fiber 27. The spectrum unit 25 includes, for example, an interferometer, which has a diffraction grading, to divide the received light in each channel wavelength and image the multiple channels of the optical signals λ1-λ16 on the optical detector of the light receiving element array module 26. The spectrum unit 25 may be provided with an angle diffusing element such as a prism, a wavelength selecting element such as a dielectric multiplayer film, or an arrayed waveguide grating (AWG).

The light receiving element array module 26 includes a light receiving array, such as a photodiode array, that serves as an optical detector. In addition to the light receiving array, the light receiving element array module 26 may include a temperature control unit for controlling the array at a constant temperature or for controlling part of a processing circuit that processes an output signal generated by each element of the light receiving element array in correspondence with each channel wavelength. The temperature control unit includes a bimetal for detecting the temperature of the light receiving element array and a temperature controlling unit, such as a Peltier element, for cooling and heating the light receiving element. Part of the processing circuit includes a multiplexer (data selector) for selecting one of the 16 signals output from the 16 elements of the light receiving array.

The electric circuit unit 23 processes the output signal of the demultiplexer module 22 to generate electric signals of 16 channels in accordance with the intensity of the optical signals of the 16 channels. The electric circuit unit 23 includes a detection circuit (timing control circuit) for sequentially retrieving a photocurrent indicating the intensity of the optical signal of each channel, a signal processing circuit for performing signal processing such as converting the photocurrent to a voltage signal, a control circuit for controlling the Peltier element based on the temperature detected by the bimetal, and an interface circuit. A multiplexer may be arranged in the electric circuit unit 23 instead of in the light receiving element array module 26.

The electric circuit unit 23 is configured so that the number of channels of optical signals may be expanded to a maximum value (in the first embodiment, 32) in the future.

In the optical communication monitor 20, prior to.an expansion of the number of channels of the optical signals, the spectrum unit 25 of the demultiplexer module 22 receives a light in which the 16ch optical signals λ1-λ16 are multiplexed. As a result, electric signals of 16 channels corresponding to the intensity of the optical signals λ1-λ16 are output from the electric circuit unit 23. The intensity of the optical signal λ1-λ16 of each channel is monitored through the electric signal.

When the number of channels of the optical signals is expanded from 16 to 32, a 16ch demultiplexer module 22, which is identical to the 16ch demultiplexer module 22 already mounted on the board 21, is mounted on the board 21 in the open area 24. Further, an optical fiber 28, which sends light to the added demultiplexer module 22, is arranged on the board 21. When a plurality of the demultiplexer modules 22 and the open area 24 are provided in different boxes, the added demultiplexer module 22 and the optical fiber 28, which sends light to the demultiplexer modules 22, may be arranged in the open area 24, which is provided in one of the boxes.

When the number of channels is expanded in this manner, the spectrum unit 25 of one of the optical demultiplexer modules 22 receives light, in which a 32ch optical signal is multiplexed, from the optical fiber 27. The other one of the spectrum unit 25 receives the same light from the optical fiber 28. In other words, light, in which optical signals λ1-λ32 of 32 channels are multiplexed, is transmitted through the two optical fibers 27, 28 (Fig. 5). The 32ch optical signals λ1-λ32 are generated by an optical splitter (not shown). The electric circuit unit 23 outputs electric signals of 32 channels in accordance with the intensity of each of the optical signals λ1-λ32. The intensity of each of the optical signals λ1-λ16 is monitored through the electric output.

The optical communication monitor 20 of the first embodiment has the advantages described below.
(a) The 16ch demultiplexer module 22, which handles the minimum number of channels (the 16ch optical signals λ1-λ16), is mounted on the board 21. Thus, when the number of channels is small, or when 16ch is enough, the demultiplexer module 22, which corresponds to the minimum number of channel (16ch), may be used. This decreases the initial cost of the system.
(b) The board 21 is provided with the open area 24 so an optical demultiplexer module 22 may be added. Further, the board 21 has a section for the two optical fibers 27, 28, which transmit light to the two optical demultiplexer modules 22.
   Thus, when the number of channels is expanded, only the additional optical demultiplexer module (16ch optical demultiplexer module) needs to be mounted in the open area 24 of the board 21, and the optical fiber 28, which transmits light to the additional optical demultiplexer module 22, needs to be arranged on the board 21. Thus, the system, which is capable of handling channel expansions, is inexpensive. Further, when the number of channels is expanded, only the optical demultiplexer module 22 needs to be added. This saves time and money when the number of channels is expanded.
(c) When a 16ch optical communication monitor and a 32ch optical monitor are used simultaneously, the two monitors may share the same board 21. This saves cost.
(d) The optical demultiplexer module 22 mounted on the board 21 from the beginning and the optical demultiplexer module 22 added when the number of channels is expanded each handle the basic number of channels, which is 16. Thus, the number of channels is expanded just by having the 16ch optical demultiplexer module 22 mounted on the board 21 from the beginning and mounting the additional 16ch optical demultiplexer module 22 on the board 21 in the open area 24 later. Further, by employing the 16ch optical demultiplexer module 22 and the expandable single board 21 provided with the open area 24, a 16ch optical communication monitor and a 32ch optical communication monitor may be designed based on the same optical demultiplexer module 22 and the board 21. In other words, only one type of the optical demultiplexer module 22, which corresponds to the basic number of channels, is necessary. Further, the same board 21 may be used in a 16ch optical communication monitor and a 32ch optical communication monitor. This further saves money when expanding the number of channels.
(e) A 16ch optical communication monitor and a 32ch optical communication monitor may use the same optical demultiplexer module, which corresponds to the basic number of channels. Thus, an expensive optical demultiplexer module, which corresponds to a number of channels that is greater than the basic number of channels, does not have to be used when the number of channels is expanded.
(f) The demultiplexer modules 22 and the open area 24 are provided in the same box, which is arranged on the board 21. This decreases the space between the demultiplexer modules 22 and makes the optical communication monitor 20 more compact.

Referring to Fig. 6, an optical communication monitor 20A according to a second embodiment of the present invention includes an optical splitter 29 to cope with future channel expansions. The optical splitter 29 provides light to each of an n number of optical demultiplexer modules 22, n being the number of the optical demultiplexer modules 22 that may ultimately be mounted on the board 21 (in the second embodiment, two). A single optical fiber 30, which provides light to the optical splitter 29, is arranged on the board 21. The n number of demultiplexer modules 22 ultimately mounted on the board 21, the open area 24, the electric circuit unit 23, and the optical splitter 29 are provided in a box, which is arranged on the board 21. Alternatively, the n number of demultiplexer modules 22 and the open area 24 may each be provided in different boxes, which are arranged on the board 21.

Prior to channel expansion, light, in which the optical signals λ1-λ16 are multiplexed, is transmitted from the single optical fiber 30 to the optical splitter 29. The light is then transmitted from the optical splitter 29 and an optical fiber 31 to a spectrum unit 25 of the optical demultiplexer module 22.

When the number of channels are expanded, light, in which the optical signals λ1-λ32 of 32 channels are multiplexed, is transmitted to the optical splitter 29 from the single optical fiber 30. The optical splitter 29 splits the light and sends the split lights to two optical fibers 31, 32. The optical fibers 31, 32 transmit the split lights to the spectrum units 25 of two demultiplexer modules 22, respectively.

The optical communication monitor 20A of the second embodiment has the advantage described below.

The optical splitter 29, which is capable of coping with future channel expansions, is mounted on the board 21 from the beginning. Thus, an additional optical splitter does not have to be mounted on the board 21 when the number of channels is expanded. This saves time and money and facilitates channel expansion.

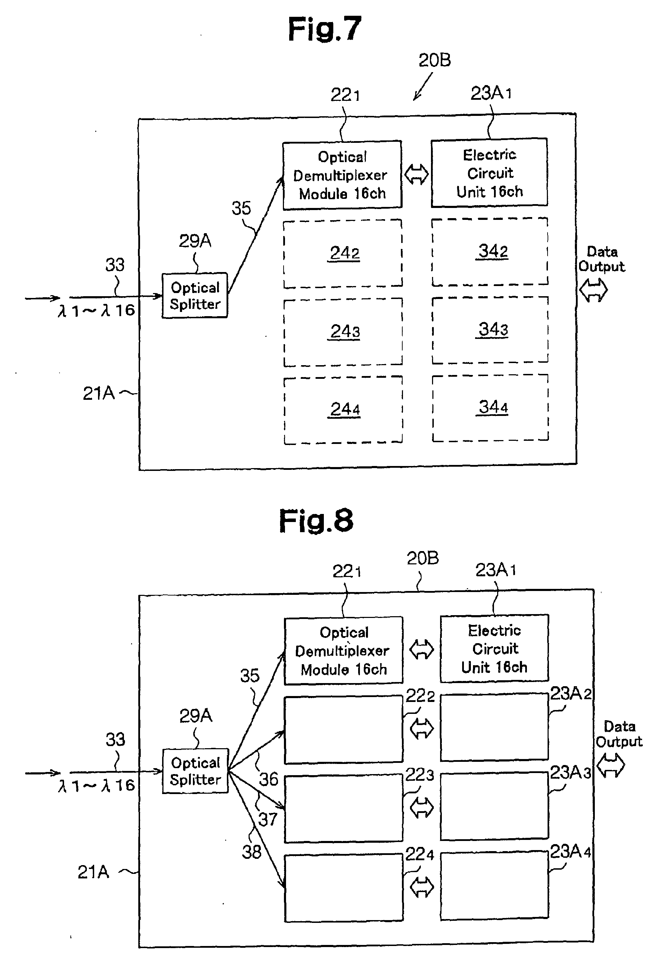

Referring to Figs. 7 and 8, an optical communication monitor 20B according to a third embodiment of the present invention includes an optical splitter 29A to cope with future channel expansions. The optical splitter 29A provides light to each of an n number of optical demultiplexer modules 22₁-22₄, n being the number of the optical demultiplexer modules 22₁-22₄ that may ultimately be mounted on the board 21 (in the third embodiment, four). A single optical fiber 33, which provides light to the optical splitter 29A, is arranged on the board 21A. The optical splitter 29A of the third embodiment splits a single optical input signal into an n number (in the third embodiment, sixteen) of optical signals. Further, an interleaver (optical splitter having wavelength selectivity) may be used as the optical splitter 29A.

Further, a set of the demultiplexer module 22₁, which corresponds to the basic number of channels (16ch), and a 16ch electric circuit unit 23A₁ are formed on the board 21A. The configuration of the optical demultiplexer module 22₁ is the same as that of the optical demultiplexer module 22 of Fig. 4.

The board 21A is provided with open area for mounting a maximum of three sets of the optical demultiplexer module and the electric circuit unit. In other words, the board 21A is provided with open areas 24₂, 24₃, and 24₄ for respectively mounting 16ch optical demultiplexer modules 22₂, 22₃, and 22₄, which are identical to the optical demultiplexer module 22₁ mounted from the beginning. The board 21A is also provided with open areas 34₂, 34₃, and 34₄ for respectively forming 16ch electric circuit units 23A₂, 23A₃, and 23A₄, which are identical to the electric circuit unit 23A₁.

In other words, the demultiplexer module 22₁, the open areas 24₂, 24₃, 24₄, the electric circuit unit 23A₁, the open areas 34₂, 34₃, 34₄, and the optical splitter 29A are provided in a box, which is arranged on the board 21. Alternatively, the demultiplexer modules 22₁-22₄, the electric circuit units 23A₁-23A₄, and the optical splitter 29A may each be provided in different boxes, which are arranged on the board 21.

Referring to Fig. 7, prior to an expansion of channel numbers, light, in which optical signals λ1-λ16 of 16 channels are multiplexed, is transmitted to the optical splitter 29A through the single optical fiber 33. The light is then transmitted from the optical splitter 29A to the optical demultiplexer module 22₁ through an optical fiber 35. In this case, the electric circuit unit 23A₁ outputs electric signals of 16 channels respectively corresponding to the intensity of the optical signals λ1-λ16. The intensity of each of the optical signals λ1-λ16 of the channels is monitored through the electric signals.

Referring to Fig. 8, when, for example, the number of channels is expanded from 16ch to 64ch, light, in which optical signals λ1-λ64 of 64 channels are multiplexed, is transmitted to the optical splitter 29A through the single optical fiber 33. The optical splitter 29A splits the light and sends the split lights to four optical fibers 35-38. The optical fibers 35-38 transmit the split lights to the spectrum units 25 of the four demultiplexer modules 22₁-22₄, respectively. The electric circuit unit 23A₁ outputs electric signals of 16 channels corresponding to the light intensity of the optical signals λ1-λ16 of the first to sixteenth channels. The electric circuit unit 23A₂ outputs electric signals of 16 channels corresponding to the light intensity of the optical signals λ17-λ32 of the seventeenth to thirty-second channels. The electric circuit unit 23A₃ outputs electric signals of 16 channels corresponding to the light intensity of the optical signals λ33-λ48 of the thirty-third to forty-eighth channels. The electric circuit unit 23A₄ outputs electric signals of 16 channels corresponding to the light intensity of the optical signals λ49-λ64 of the forty-ninth to sixty-fourth channels. In this manner, electric signals of 64 channels that correspond to the light intensity of the optical signals λ1-λ64 of the 64 channels are generated. The intensity of each of the optical signals λ1-λ64 is monitored using the electric signals.

The optical splitter 29A of the third embodiment has the advantage described below.

A set of the 16ch (basic channel number) optical demultiplexer module 22₁ and the 16ch electric circuit unit 23A₁ are mounted on the board 21A from the beginning. When the number of channels is expanded, the necessary number of the sets of 16ch optical demultiplexer modules 22₂-22₄ and electric circuit units 23A₂-23A₄ are formed on the board 21A in the associated open areas 24₂-24₄ and 34₂-34₄. Tt is thus required that only optical demultiplexer modules and electric circuit units for 16 channels, which is the basic channel number, be prepared. Accordingly, the same components are shared not only in the optical demultiplexer module 22₁-22₄ but also in the electric circuit units 23A₁-23A₄. This further saves money when expanding the number of channels.

The above embodiments may be modified as described below.

Instead of using a single light receiving element of the light receiving element array module 26 to detect the intensity of the single optical signal of each channel, for example, a plurality of light receiving elements may be used to detect the single optical signal of each channel and detect the profile of the wavelength of each optical signal or measure the optical signal-to-noise (SN) ratio.

The number of channels of the optical demultiplexer module 22 mounted on the board 21 or the board 21A is not limited to 16. In other words, an optical demultiplexer module 22 corresponding to a number of channels other than 16 may be employed.

The number of optical demultiplexer modules 22 ultimately mounted on the board 21 is not limited to two and may be three or more.

The number of channels of the additional optical demultiplexer module 22 mounted in the open area may differ from the number of channels of the optical demultiplexer module 22 that is mounted on a board from the beginning.

The optical demultiplexer module 22 mounted on the board 21 or the board 21A is not limited to the 16 channels. The optical demultiplexer module 22 may correspond to any number of optical signal channels.

In the first embodiment, the n number of demultiplexer modules 22 and the open area 24 may each be provided in different boxes, which are arranged on the board 21.

In each of the above embodiments, the demultiplexer modules 22 and the electric circuit unit 23 are arranged on the same board 21. However, the present invention may also be applied to a configuration in which only the demultiplexer modules 22 are arranged on the board 21.

In the second embodiment, the ultimately connected n number of demultiplexer modules 22₁-22₄, the electric circuit units 23A₁-23A₄, and the optical splitter 29A may each be provided in different boxes, which are arranged on the board 21.

In the third embodiment, the demultiplexer module 22₁, the open areas 24₂, 24₃, 24₄, the electric circuit unit 23A₁, the open areas 34₂, 34₃, 34₄, and the optical splitter 29A are provided in the same box, which is arranged on the board 21. However, the present invention is not limited to such configuration. For example, the demultiplexer modules 22₁-22₄, the electric circuit units 23A₁-23A₄, and the optical splitter 29A may each be provided in different boxes, which are arranged on the board 21.

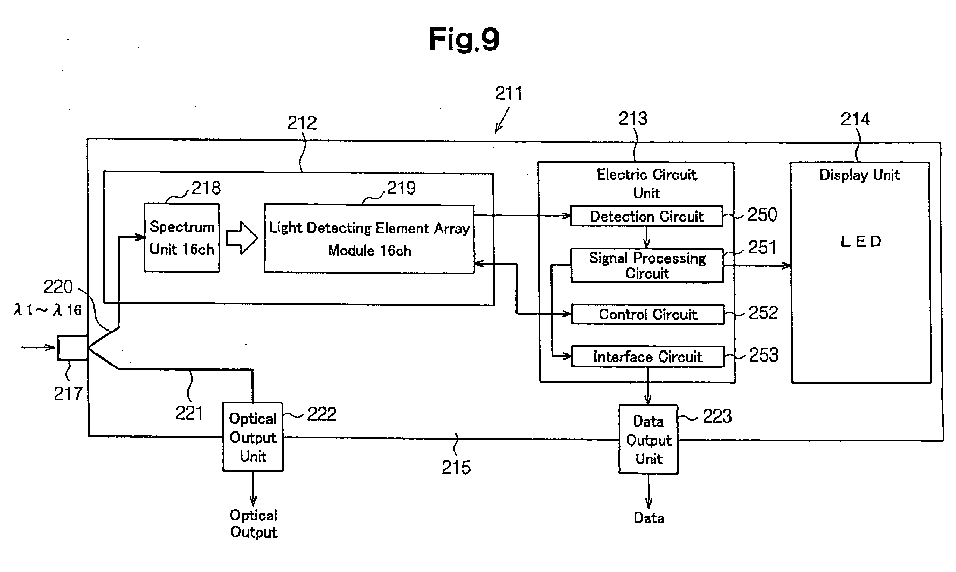

Referring to Fig. 9, an optical communication monitor 211 according to a fourth embodiment of the present invention splits light, in which optical signals of multiple channels (in the fourth embodiment, 16) are multiplexed, in each wavelength (λ1-λ16) to measure the optical power level of each channel.

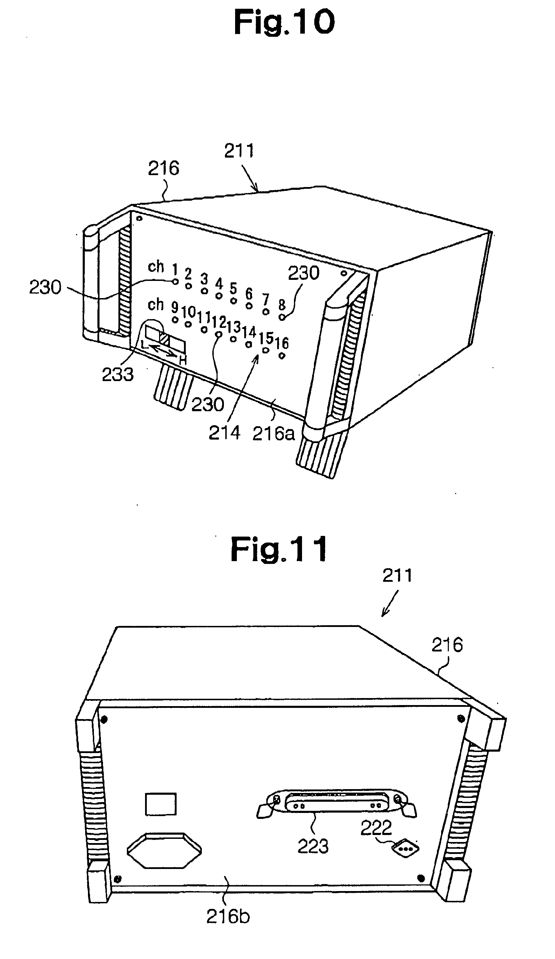

Referring to Figs. 9 and 10, the optical communication monitor 211 includes a 16 channel (ch) optical demultiplexer module 212, an electric circuit unit 213, a display unit 214, a monitor-incorporated board 215, a body frame 216, and an optical splitter 217. The optical demultiplexer module 212 and the electric circuit unit 213 are located on the board 215 and accommodated in the body frame 216.

The optical demultiplexer module 212 includes a 16 channel (ch) spectrum unit 218 and a 16 channel light receiving element array module 219. The optical splitter 217 splits the received light into two lights and transmits one of the split lights to the spectrum unit 218 through an optical fiber 220. The other one of the split lights is transmitted to an optical output unit 222 through an optical fiber 221.

The spectrum unit 218 is configured in the same manner as the spectrum unit 25 of Fig. 4.

The light receiving element array module 219 detects the intensity of the optical signal of each channel imaged by an optical detector to generate a photocurrent, which represents the light intensity (optical power level) of each channel. The light receiving element array module 219 is configured in the same manner as the light receiving element array module 26 of Fig. 6.

The electric circuit unit 213, which includes a detection circuit 250, a signal processing circuit 251, a control circuit 252, and an interface circuit 253, processes a photocurrent output signal of the demultiplexer module 212 to generate electric signals of the 16 channels. The detection circuit 250 amplifies the photocurrent, which represents the light intensity of each channel. The signal processing circuit 251 converts the amplified photocurrent signal to a voltage signal. The control circuit 252 controls a Peltier element based on the temperature detected by a bimetal of the light receiving element array module 219. A multiplexer may be arranged in the electric circuit unit 213 instead of in the light receiving element array module 219.

The display unit 214 shows the measurement result of the optical power level of each channel. The display unit 214 is arranged on an outer panel 216a of the body frame 216 and has illuminations, or light emitting diodes (LEDs) 230, one for each of the 16 channels. In other words, since the optical communication monitor 211 handles 16 channels, a total of 16 LEDs 230 are arranged on the outer panel 216a. A channel number (numerals 1-16) is marked on the outer panel 216a near the LED 230 of each channel.

The signal processing circuit 251 determines whether the optical power level of each channel is greater than or equal to a threshold value based on a voltage signal, activates the LEDs 230 corresponding to channels having optical power levels that are greater than or equal to the threshold value, and deactivates the LEDs 230 corresponding to channels having an optical power level that is less than the threshold value. An adjusting device, or adjusting tab 233, which adjusts the threshold value, is arranged on the outer panel 216a of the body frame 216 and connected to the signal processing circuit 251.

Referring to Figs. 9 and 11, a data output unit 223, which outputs optical power level measurement data of each channel, is connected to the optical output unit 222 and the interface circuit 253. The data output unit 223 is arranged on an outer panel 216b. The outer panels 216a, 216b are located on opposite sides of the body frame 216. Data, which includes the optical power level of each channel detected by the electric circuit unit 213, is output from the data output unit 223.

The optical communication monitor 211 of the fourth embodiment has the advantages described below.
(a) A user may easily check whether the optical power level of every channel is normal or whether the optical power level of any one of the channels is abnormal just by looking at the LEDs 230. In other words, if an LED 230 is activated (illuminated), the power level of the associated channel is greater than or equal to the threshold value and thus normal. If an LED 230 is inactivated (not illuminated), the power level of the associated channel is less than the threshold value and thus abnormal.
   Accordingly, the user does not have to do anything special to monitor the optical power level of every channel. Thus, the user easily recognizes the power level of every channel.
(b) The monitor 211 only includes the basic function of displaying the measurement result of the optical power level of each channel. This decreases the manufacturing cost of the optical communication monitor 211.
(c) The spectrum unit 218 is provided with an interferometer, which includes a diffraction grating. Thus, the spectrum unit 218 divides light in each wavelength without using a movable member. Accordingly, the spectrum unit 218 is more compact than an optical spectrum analyzer having a movable wavelength detector.
(d) The optical demultiplexer module includes a light receiving element array, which detects the optical signal of each channel multiplexed by the spectrum unit 218. This simplifies the structure of the monitor 211.
(e) The light transmitted to the optical communication monitor 211 may be transmitted from the optical output unit 222 to a further device.
(f) The measurement data of the optical power level of each channel is output from the data output unit 223. Thus, the intensity of the light emitted from each light source may be controlled at the optimal intensity by transmitting the measurement data to a light source controller (not shown), which controls the light source of each channel.

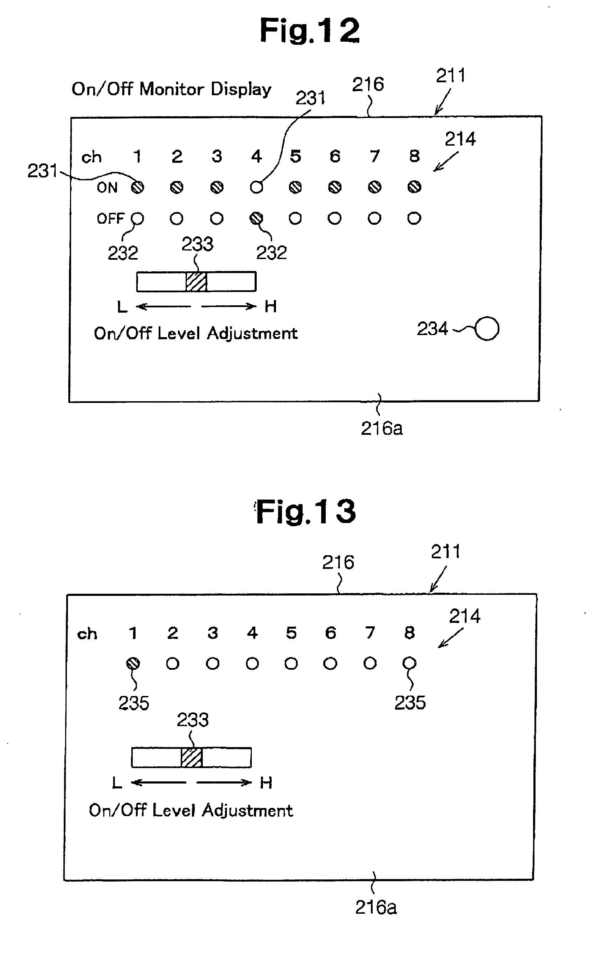

With reference to Fig. 12, an optical communication monitor 211 according to a fifth embodiment of the present invention includes multiple sets of illuminations, or LEDs 231, 232, in correspondence with a plurality of channels. That is, two LEDs 231, 232 are provided for each channel, Fig. 12 shows an eight channel display unit 214.

A signal processing circuit 251 determines whether or not the optical power level of each channel is greater than or equal to a threshold value. If the optical power level is greater than or equal to the threshold value, the signal processing circuit 251 activates the LED 231 and inactivates the LED 232 that correspond to the channel. If the optical power level is less than the threshold value, the signal processing circuit 251 inactivates the corresponding LED 231 and activates the corresponding LED 232. Further, an adjusting tab 233 for adjusting the threshold value is arranged on an outer panel 216a of a body frame 216.

A warning lamp 234, which goes on when the optical power level of any one of the channels is less than the threshold value, is arranged on the outer panel 216a. The signal processing circuit 251 lights the warning lamp 234 when the optical power level of any one of the channels becomes less than the threshold value.

The optical communication monitor 211 of the fifth embodiment has the advantages described below.
(a) A user may easily recognize whether the optical power of each channel is normal just by looking at the LEDs 231, 232 of each channel. That is, when the LED 231 corresponding to a channel is activated and the LED 232 corresponding to the same channel is inactivated, this indicates that the optical power level of the channel is greater than or equal to the threshold value. In such case, the channel is normal. When the LED 231 corresponding to a channel is inactivated and the LED 232 corresponding to the same channel is activated, this indicates that the optical power level of the channel is less than the threshold value. In such case, the channel is abnormal. In the example shown in Fig. 12, the optical power level of the fourth channel is abnormal and the optical power levels of the other channels are normal.
(b) The adjusting tab 233 on the outer panel 216a of the body frame 216 enables the threshold value to be changed to the desired value. This facilitates the operation of the optical communication monitor 211.
(c) A user easily recognizes that the optical power level of any one of the channels has become less than the threshold value when the warning lamp 234 goes on. In such a case, the user looks at'the LEDs 231, 232 to find the channel of which optical power level is less than the threshold value and is thus abnormal. This feature is especially advantageous when the number of channels increases.

Referring to Fig. 13, an optical communication monitor 211 according to a sixth embodiment of the present invention includes a plurality of illuminated devices 235, each of which corresponds to one of the multiple channels and which emits two colors. A signal processing circuit 251 determines whether the optical power level of each channel is greater than or equal to a threshold value. The signal processing circuit 251 illuminates the corresponding illuminated device 235 with a first color (e.g., green) if the optical power level of a channel is greater than or equal to the threshold value and illuminates the corresponding illuminated device 235 with a second color (e.g., red) if the optical power level of a channel is less than the threshold value.

The optical communication monitor 211 of the sixth embodiment has the advantages described below.

A user easily recognizes whether or not the optical power level of each channel is normal just by looking at the colors of the illuminated devices 235. In other words, when the illuminated device 235 corresponding to a certain channel is illuminated by the first color, this indicates that the optical power level of the channel is greater than or equal to the threshold value and that the optical power level is normal. When the illuminated device 235 is illuminated by the second color, this indicates that the optical power level of the channel is less than the threshold value and that the optical power level is abnormal. In the example of Fig. 13, only the illuminated device 235 corresponding to the first channel is illuminated by the second color. This indicates that the optical power level of the first channel is abnormal.

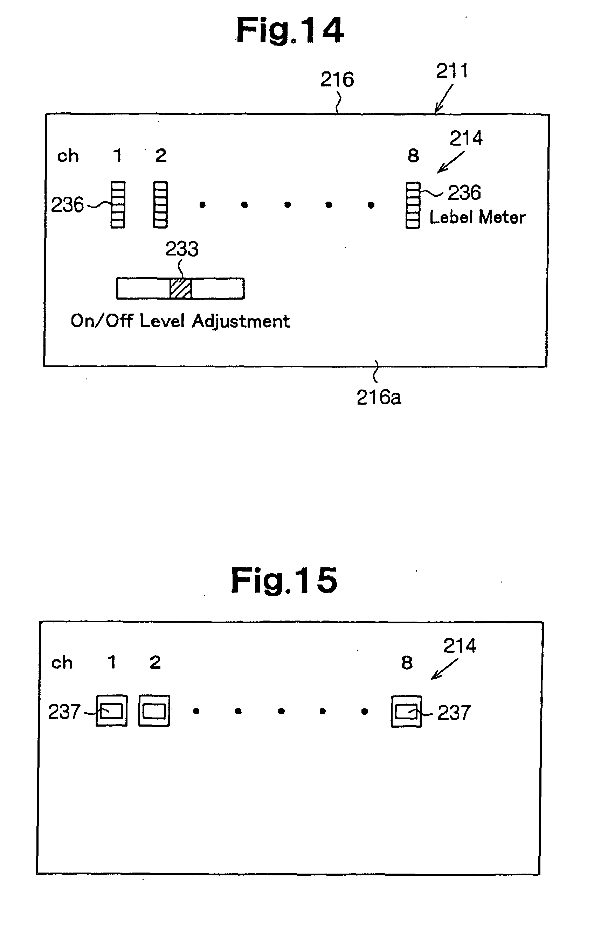

Referring to Fig. 14, an optical communication monitor according to a seventh embodiment of the present invention includes a plurality of level meters 236, each corresponding to one of multiple channels. Each level meter includes a plurality of (in the seventh embodiment, six) illuminated portions, which are lined vertically. When the optical power level is greater than or equal to the threshold value, the signal processing circuit 251 activates the illuminated portions of the corresponding level meter 236 that are located between a lowermost position and a predetermined position (e.g., uppermost position) of the level meter 236. When the optical power level is less than the threshold value, the signal processing circuit 251 activates the illuminated portions located between the lowermost position and a position that is in accordance with the optical power level.

The optical communication monitor of the seventh embodiment has the advantages described below.

A user may easily determine whether the optical power level of each channel is normal just by looking at the activated state of the six illuminated portions in the corresponding level meter 236. In other words, when the illuminated portions located between the lowermost position and the predetermined position are activated in a certain lever meter 236, this indicates that the optical power level of the corresponding channel is greater than or equal to the threshold value. In this state, the optical power level is normal. When the illuminated portions located between the lowermost position and the predetermined position are not activated in a certain lever meter 236, this indicates that the optical power level of the corresponding channel is less than the threshold value. In this state, the optical power level is abnormal.

Referring to Fig. 15, an optical communication monitor according to an eighth embodiment of the present invention includes numeral displays, or liquid crystal displays (LCD) 237, each of which corresponds to a channel. Each LCD 237 functions as a numeral display displaying a numeral that indicates the optical power level of the corresponding channel. The signal processing circuit 251 displays a numeral on each LCD 237 to indicate the optical power level of the corresponding channel.

The optical communication monitor of the eighth embodiment has the advantages described below.

A user may easily determine whether the optical power level of each channel is normal just by looking at the numeral displayed on the corresponding LCD 237.

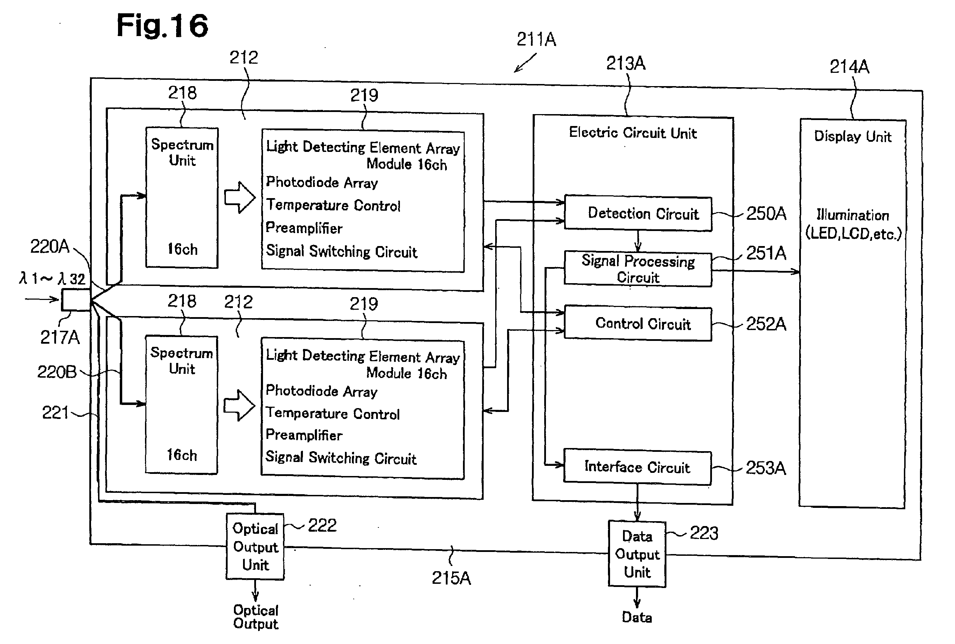

Referring to Fig. 16, an optical communication monitor 211A according to a ninth embodiment of the present invention is configured by expanding the optical communication monitor 211 of Fig. 9 from 16 channels to 32 channels. The optical communication monitor 211A includes two of the 16 channel optical demultiplexer modules 212 of Fig. 9, a 32 channel electric circuit unit 213A, and a 32 channel display unit 214A. The area of a monitor-incorporated board 215A is greater than that of the monitor-incorporated board 215.

An optical splitter 217A receives light (λ1-λ32), in which optical signals of 32 channels are multiplexed, and splits the light into three. The first light is transmitted to a first spectrum unit 218 through an optical fiber 220A. The second light is transmitted to a second spectrum unit 218 through an optical fiber 220B. The third light is transmitted to an optical output unit 222 through an optical fiber 221. The display unit 214A preferably includes any one of thirty-two of the LEDs 230, thirty-two sets of the LEDs 231, 232, thirty-two of the illuminated devices 235, thirty-two of the level meters 236, and thirty-two of the LCDs 237.

The optical communication monitor of the ninth embodiment has the advantages described below.

The optical communication monitor 211A divides the light, in which the optical signals of 32 channels (λ1-λ32) are multiplexed, in each wavelength, measures the optical power level of each channel, and outputs measurement data. A user may easily determine whether or not the optical power level of each channel is normal just by looking at the illuminated portions corresponding to the 32 channels.
(1) In the fourth to ninth embodiments, the present invention is embodied in the optical communication monitors that are provided with the demultiplexer module 212, which includes the spectrum unit 218 and the light receiving element array module 219. However, the present invention may also be applied to a typically used optical communication monitor.
(2) In the fourth embodiment, lamps may be used in lieu of the LEDs 230.
(3) The display panel of Fig. 10 corresponds to 16 channels, and the display panels of Figs. 12 to 15 correspond to 8 channels.
(4) The warning lamp 234 of the fifth embodiment may be used in the other embodiments.
(5) A buzzer may be used in lieu of the warning lamp 234.
(6) In the eighth embodiment, the LCDs 237, which indicates numerals representing optical power levels, may be replaced by electroluminescent (EL) devices or LEDs.
(7) Instead of indicating the optical power level of every channel, the optical power level of only selected channels may be indicated. Alternatively, the channels may be divided into two and two optical communication monitors may be employed with each monitor indicating the states of either half of the channels.
(8) The optical splitters 217, 217A of Figs. 9 and 16 are used to split the received light into an n number of outputs and may be an interleaver (optical splitter having wavelength selectivity).

It should be apparent to those skilled in the art that the present invention may be embodied in many other specific forms. Therefore, the present examples and embodiments are to be considered as illustrative and not restrictive.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to :any novel one, or any novel combination, of the features disclosed in this specification (including any accompanying claims, abstract and drawings), or to any novel one, or any novel combination, of the steps of any method or process so disclosed.

## Claims

1. An optical communication monitor comprising:
a first optical demultiplexer module (22) for dividing light, in which optical signals of multiple channels are multiplexed, in each channel to detect the optical signals and generate multiple detection signals;
a first electric circuit unit (23) connected to the first demultiplexer module for processing the detection signals and generating electric signals of the multiple channels; and
a board (21) on which at least the first optical demultiplexer module is located, **characterized in that** the board includes open area (24) for additionally mounting at least one second optical demultiplexer module.

2. The monitor according to claim 1, **characterized in that** the board includes a section in which a plurality of optical fibers are arranged in association with the first optical demultiplexer module and the at least one second optical demultiplexer module.

3. The monitor according to claim 1, further comprising an optical splitter (29) optically connected to the first optical demultiplexer module and located on the board, wherein the splitter splits the light and sends the split lights to the first optical demultiplexer module and the at least one second optical demultiplexer module.

4. The monitor according to claim 1, **characterized in that** the board has a section in which an optical fiber (30) for transmitting the light to the optical splitter is arranged.

5. The monitor according to one of claims 1 to 5, **characterized in that** each of the first demultiplexer module and the at least one second optical demultiplexer module corresponds to a basic number of the channels.

6. The monitor according to one of claims 1 to 6, **characterized in that** the first electric circuit unit is connected to the first demultiplexer module and the at least one second demultiplexer module.

7. The monitor according to one of claims 1 to 5, further comprising at least one second electric circuit unit connected to the at least one second optical demultiplexer module, **characterized in that** the board includes an open area in which the at least one second electric circuit unit is located.

8. The monitor according to one of claims 1 to 8, **characterized in that** the first optical demultiplexer module corresponds to a minimum number of the channels.

9. An optical communication monitor (211) for dividing light, in which optical signals of multiple channels are multiplexed, in each channel to measure an optical power level of the optical signal of each channel, wherein the monitor comprises a body frame (216) having an outer panel (216a), the monitor **characterized by**
a display unit (214) arranged on the outer panel, wherein the display unit includes a plurality of illuminations for indicating the optical power levels of the optical signals of the multiple channels.

10. The monitor according to claim 9, **characterized in that** the outer panel has channel numbers marked near the illuminations.

11. The monitor according to claim 9 or 10, further comprising:
a light receiving element array module (219) for detecting the optical signals of the multiple channels and generating multiple detection signals; and
an electric circuit unit (214) connected to the light receiving element array module and the display unit for detecting the optical power levels of the optical signals of the multiple channels from the multiple detection signals and indicating the optical power level of the optical signal of each channel with an associated one of the illuminations in accordance with the detection.

12. The apparatus according to claim 11, **characterized in that** each of the illuminations is a light emitting device that is activated and inactivated, and wherein the electric circuit unit determines whether the optical power level of the optical signal of each channel is greater than or equal to a threshold value, activates the light emitting device associated with the channel of which optical power level of the optical signal is greater than or equal to the threshold value, and inactivates the light emitting device associated with the channel of which optical power level of the optical signal is less than the threshold value.

13. The monitor according to claim 12, **characterized by** an adjusting device (233) arranged on the outer panel and connected to the electric circuit unit for adjusting the threshold value.

14. The monitor according to claim 11, **characterized in that** each of the illuminations includes two light emitting devices that are activated and inactivated, and wherein the electric circuit unit determines whether the optical power level of the optical signal of each channel is greater than or equal to a threshold value, activates a first one and inactivates a second one of the light emitting device associated with the channel of which optical power level of the optical signal is greater than or equal to the threshold value, and inactivates a first one and activates a second one of the light emitting device associated with the channel of which optical power level of the optical signal is less than the threshold value.

15. The monitor according to claim 14, **characterized by** an adjusting device (233) arranged on the outer panel and connected to the electric circuit unit for adjusting the threshold value.

16. The monitor according to claim 11, **characterized in that** each of the illuminations includes an illuminated device illuminated by two colors, and wherein the electric circuit unit determines whether the optical power level of the optical signal of each channel is greater than or equal to a threshold value, illuminates the illuminated device associated with the channel of which optical power level of the optical signal is greater than or equal to the threshold value with a first one of the two colors, and illuminates the illuminated device associated with the channel of which optical power level of the optical signal is less than the threshold value with a second one of the two colors.

17. The monitor according to claim 16, **characterized by** an adjusting device (233) arranged on the outer panel and connected to the electric circuit unit for adjusting the threshold value.

18. The monitor according to claim 11, **characterized in that** each of the illuminations includes a level meter (236) having a plurality of vertically lined illuminated portions, and wherein the electric circuit unit determines whether the optical power level of the optical signal of each channel is greater than or equal to a threshold value and illuminates the light emitting portions of the level meter, associated with the channel of which optical power level of the optical signal is greater than or equal to the threshold value, between a lowermost position and a predetermined position of the level meter.

19. The monitor according to claim 18, **characterized in that** the predetermined position is an uppermost position of the light emitting portions.

20. The monitor according to claim 18, **characterized by** an adjusting device (233) arranged on the outer panel and connected to the electric circuit unit for adjusting the threshold value.

21. The monitor according claim 9, **characterized in that** each of the illuminations is a numeral display for displaying a numeral that indicates the power level.

22. The monitor according to one of claims 9 to 21, **characterized by** a warning means (234) for warning that the optical power level of the optical signal of at least one of the channels is less than or equal to a predetermined value.

23. The monitor according to one of claims 9 to 22, further comprising:
an optical splitter (217) for splitting the light and generating split lights;
an optical output unit (222) optically connected to the optical splitter for outputting one of the split lights; and
a data output unit (223) for outputting measurement data of the optical power level of the optical signal of each channel.
